# EUROPEAN PATENT APPLICATION

(11) **EP 2 060 358 A1**
(43) Date of publication of application: **20.05.2009**
(21) Application number: 07425721.3
(22) Date of filing: 14.11.2007
(51) Int. Cl.: B23K 26/08, B23K 37/02, B23K 37/04

(54) **Laser cutting machine for metal sheets**

(71) Applicant: Rainer S.r.l., I-40012 Calderara di Reno (Bologna) (IT)
(72) Inventor: Raimondi, Stefano, 40133 Bologna (IT)
(74) Representative: Jorio, Paolo

(57) **Abstract**

A laser cutting machine (1) for metal sheets (2), in which a laser cutting station (5) is arranged between a sheet loading store (26) and an unloading store (27) arranged below the work surface (4), an intermediate portion (17) of which is arranged at the laser cutting station (5) and is provided with a door (18) that may be opened in order to unload the cut parts of sheet (2), a first portion (14) may be moved from and towards a closed position of the un loading store (26), and a second portion (15) may be moved from and towards a closed position of the unloading store (27); an extraction device (42) being provided to selectively lift the metal sheets (2) from the loading store (26) at least partially above the work surface (4) when the first portion (14) is arranged in an open position.

## Description

The present invention relates to a laser cutting machine for metal sheets.

In particular, the present invention relates to a laser cutting machine for metal sheets and of the type including a work surface; a cutting station comprising a mobile laser cutting head on the work surface; and a handling device for the sheets to selectively feed each metal sheet in a working direction through the cutting station; the work surface comprising a first portion arranged upstream from the cutting station in the working direction and adapted to receive the metal sheets to be processed, a second portion arranged downstream from the cutting station and adapted to receive the scraps; and a third portion arranged at the cutting station and comprising a door that may be opened for unloading the cut metal sheet parts .

Normally, a machine of the type disclosed above also comprises a first feeding device for the sheets to be processed, which is interposed between the machine and a first store to each time withdraw a metal sheet from the store and feed the same to the handling device, and a second device to move away the scraps, is the second device being interposed between the handling device and a second store to each time receive the scraps resulting from the processing of a metal sheet and transfer such scraps to the second store.

The main drawback of this kind of machine is the considerable size thereof with respect to the size of the metal sheets to be processed.

It is the object of the present invention to provide a laser cutting machine for metal sheets having a compact structure and a relatively limited size.

According to the present invention, a laser cutting machine for metal sheets is provided as claimed in Claim 1 and preferably according to any foregoing Claim dependent directly or indirectly on Claim 1.

The present invention will now be described with reference to the accompanying drawings, which show a non-limitative embodiment thereof, in which:
- figure 1 shows an elevational perspective view of a preferred embodiment of the machine of the present invention;
- figure 2 is a plan view of the machine of figure 1;
- figures 3 and 4 show a side elevational enlarged view of a detail of figure 1 in respective operational configurations;
- figures 5 to 8 show an axial-section view, with parts removed for clarity, of a first portion of the machine of figure 1 in respective operational configurations;
- figures 9 and 10 show an axial-section view, with parts removed for clarity, of a second portion of the machine in figure 1 in respective operational configurations; and
- figures 11 to 13 show a cross section along line XI-XI, with parts removed for clarity, of a detail of figure 1 in respective operational configurations.

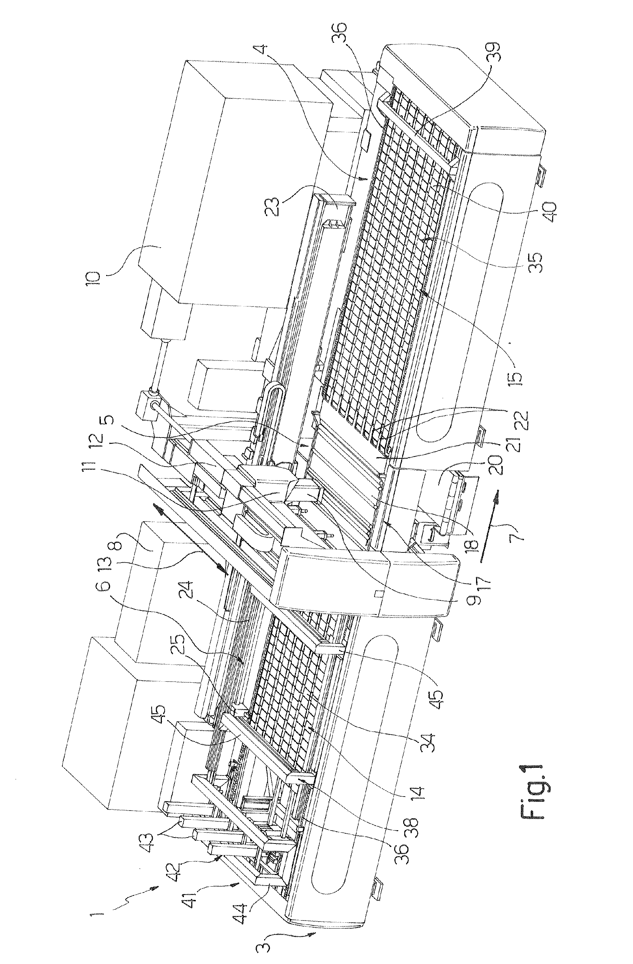

In figure 1, numeral 1 indicates as a whole a machine for the laser cutting of metal sheets 2.

The machine 1 includes a frame 3, a substantially horizontal work surface 4, a cutting station 5, and a handling device 6 for the sheets 2, which is connected to a control unit 8 and, in use, serves the function of selectively feeding the sheets 2 in a controlled manner on the work surface 4 through the cutting station 5 in a working direction 7 parallel to the work surface 4 itself.

Specifically, the cutting station 5 includes a laser cutting head 9 (of the known type) connected to a laser source 10 and rested on a turret 11, which is assembled on a guiding bar 12 supported by the frame 3 and is connected to the control unit 8 to displace, in use, the cutting head 9, in a direction 13 perpendicular to the working direction 7, in a manner controlled and coordinated with the feeding of the sheet 2 in the working direction 7 itself.

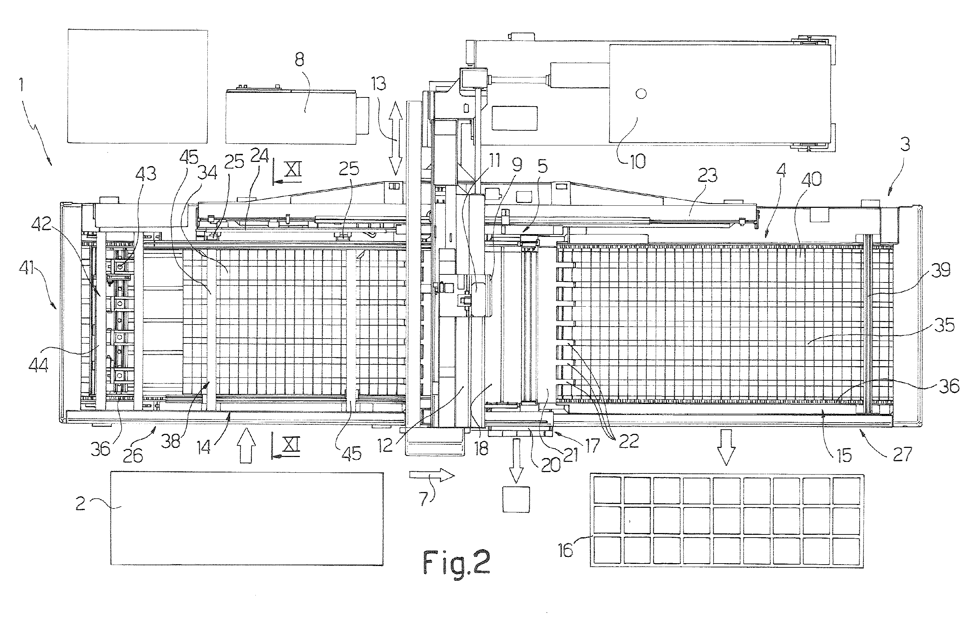

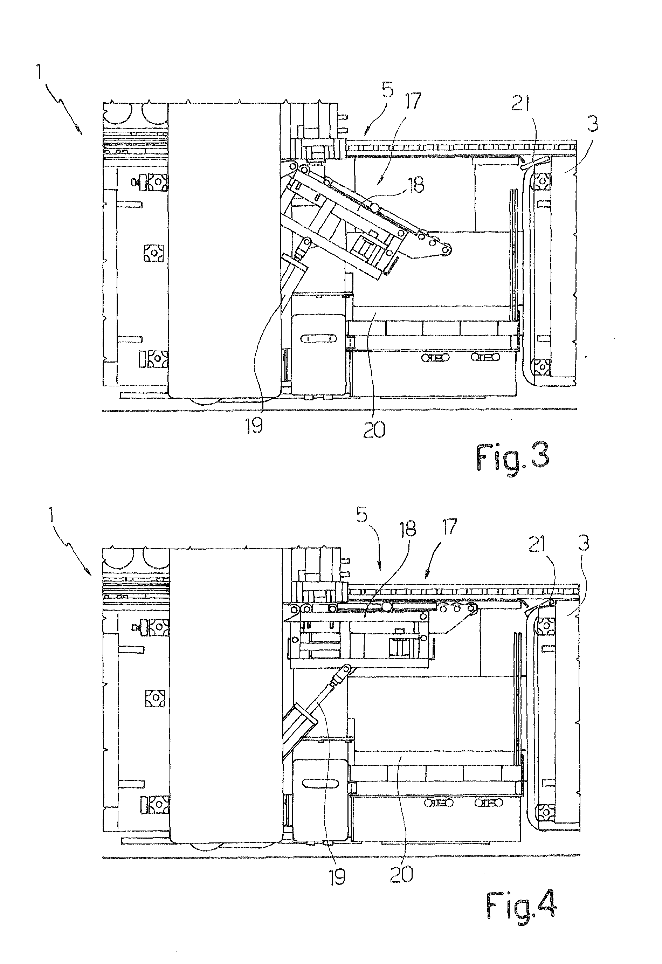

According to figures 1 and 2, the work surface 4 is substantially divided into three portions: a portion 14, which is arranged upstream of the cutting station 5 in the working direction 7 and is adapted to sequentially receive the sheets 2 to be processed, a portion 15, which is arranged downstream of the cutting station 5 and is adapted to sequentially receive the scraps 16 of the processed sheets 2, and a portion 17, which is arranged at the cutting station 5 and includes a door 18, which is mobile, in use, under the thrust of a pneumatic actuator 19, between a horizontal position (figure 4), in which the door 18 defines a part of the work surface 4, and a position inclined downwards (figure 3), in which the door 18 allows the portions of sheet 2 cut by the cutting head 9 to fall on a conveyor 20 in order to be transferred from the latter to a collection container (not shown).

The portion 17 further includes two connecting plates 21 arranged in fixed positions on opposite sides with respect to the door 18 to connect the side edges of the door 18 to the portions 14 and 15, respectively, of the work surface 4 so as to avoid, in use, a possible jamming of the sheets 2 while they are fed through the cutting station 5. Specifically, according to figure 2, each plate 21 consists of a flat plate integral with the frame 3, having the same width, measured parallelly to the direction 13, of the work surface 4, and bearing along the free longitudinal edge thereof facing the adjacent portion 14, 15 a plurality of connected longitudinal protrusions 22 partially extending above the portion 14, 15 itself.

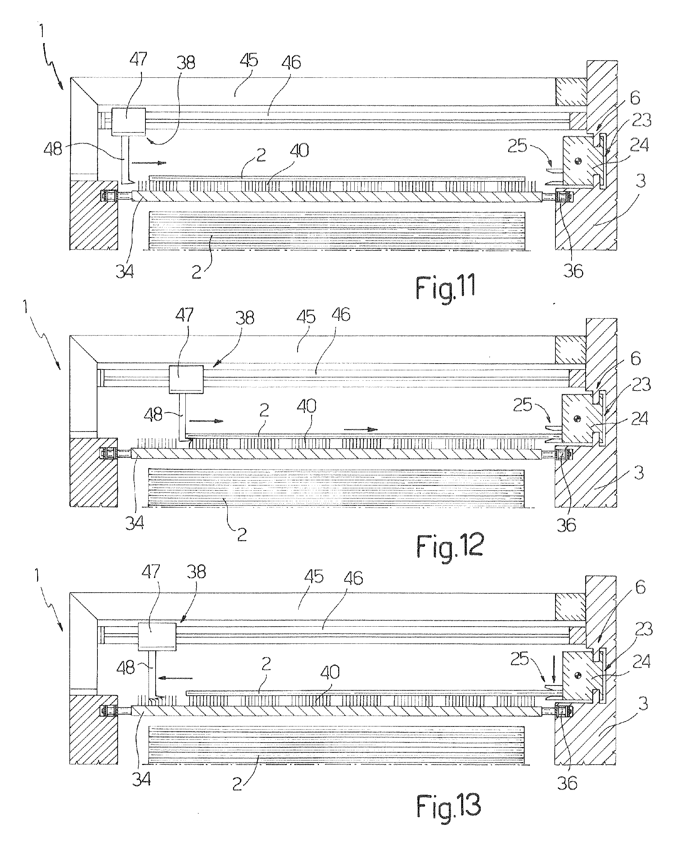

According to figure 1 and, in greater detail, to figures 11-13, the handling device 6 includes a C-shaped guide 23, which is obtained on the frame 3 along a side of the work surface 4 parallelly to the working direction 7 and is slidingly engaged by a shoe 24 connected to the control unit 8 and rigidly bearing a plurality of connected claws 25, the function of which is to grip, in use, an edge of a sheet 2 which has previously been fed on the portion 14 of the work surface 4, and displace the sheet 2 through the cutting station 5 in virtue of the controlled forward motion of the shoe 24 along the guide 23.

With reference to figures 1, 5 and 9, the machine 1 further includes two stores 26 and 27, of which store 26 is obtained in a space formed by the frame 3 under portion 14 and is adapted to accommodate a stack of sheets 2, and store 27 is obtained in a space formed by the frame 3 under the portion 15 and is adapted to accommodate a stack of scraps 16.

For this purpose, each store 26, 27 is provided with a corresponding support 28 assembled on a mobile carriage 29 including two shoes 30 slidingly engaged in corresponding guides 31 integral with the frame 3 to displace the support 28 perpendicularly to the working direction 7 between an inner position, in which the support 28 is arranged in the corresponding store 26, 27, and an extracted position, in which the support 28 is partially arranged outside the corresponding store 26, 27 to allow the loading or, respectively, the unloading of the stack of sheets 2 or, respectively, of the scraps 16.

Each store 26, 27 is in communication with the work surface 4 by means of a respective opening 32, 33, which is normally closed by a corresponding shutter 34, 35 defining the respective portion 14, 15 on the work surface 4.

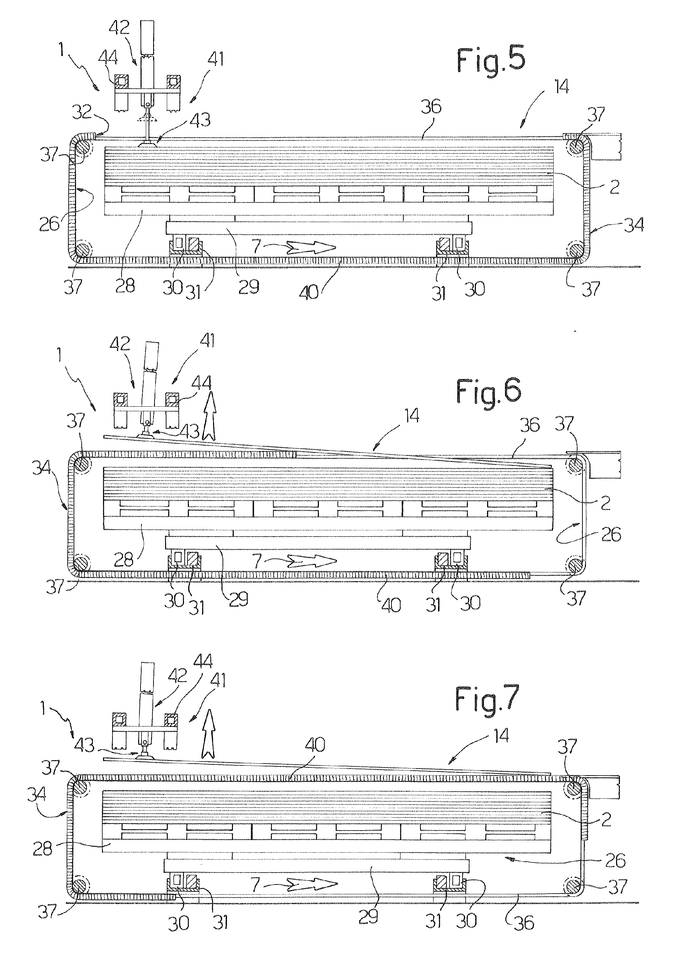

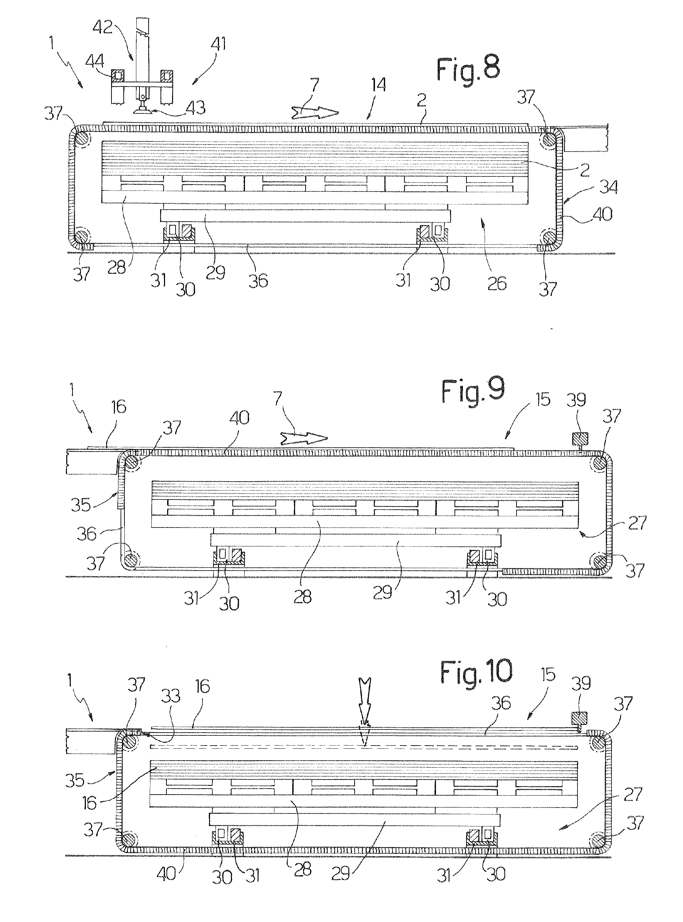

According to figures from 5 to 10, each shutter 34, 35 is defined by a respective articulated element formed by a plurality of metal sections, which are reciprocally articulated, extend in a direction transversal to the working direction 7 and reciprocally connect two chains 36 wound like a ring around four pulleys 37 arranged at the vertexes of the corresponding store 26, 27 and at least one of which is a motorised pulley to displace, in use, the shutter 34, 35 along a respective closed path extending around the corresponding store 26, 27. Each shutter 34, 35 displays a length shorter than the corresponding forward motion path around the corresponding store 26, 27 of an amount equivalent to the length of the corresponding opening 32, 33 so as to assume selectively an open position (figures 5 and 10) and a closed position (figures 8 and 9) of the corresponding opening 32, 33, by moving around the corresponding store 26, 27.

As will hereinafter become clearer, in the closed position (figure 8), the shutter 34 serves the dual function of supporting a sheet 2 and of conveying the sheet 2 in the working direction 7 in order to arrange it in a clamping position, in which the sheet 2 is intercepted by a loading device 38 and is transversally pushed between the claws 25 of the handling device 6. In the open position (figure 5), instead, the shutter 34 allows the extraction of the sheet 2 arranged on top of the stack housed in the store 26 in a manner which will be explained below.

Similarly, in its closed position (figure 9), the shutter 35 serves the dual function of supporting a scrap 16 and, at the end of the cutting step, of conveying the scrap 16 in the working direction 7 until a free front edge of the scrap 16 reaches a fixed catch 39. In the open position, the shutter 35 finally allows the scrap 16 to fall by gravity through the opening 33 and be arranged on top of a stack housed in the store 27.

According to figure 1, each shutter 34, 35 is externally covered by a plurality of transversal brushes 40, each of which is fixed to a corresponding metal section and has a succession of smooth transversal strips to allow the passage of the protrusions 22 during the displacement of the corresponding shutter 34, 35.

In order to extract the sheets 2 from the store 26, the machine 1 includes an extraction device 41 including, in turn, a depression gripping device 42 arranged at the inlet end (with reference to the working direction 7) of the portion 14 and including a plurality of aspirated gripping heads 43, each of which is assembled on a support 44 integral with the frame 3 and is connected to a corresponding pneumatic actuator 45 in order to move simultaneously with the other gripping heads 43, in use, between a lifted position (figure 8) and a lowered position (figure 5), in which each gripping head 43 extends through the aperture 32 and engages the sheet 2 arranged on top of the stack of sheets 2. As will hereinafter be more clearly explained, the extraction of the sheet 2 and its positioning on the work surface 4 occurs by means of the synergistic action of the gripping device 42 and of the shutter 34, which may accordingly be considered, from this point of view, as part of the extraction device 41.

According to figures from 11 to 13, the above mentioned loading device 38 includes a pair of support bridges 45, which are integral with the frame 3, extend at a determined distance one from the other above the portion 14 and each bear a guide 46 connected on the part facing the portion 14 itself, the guide 46 being perpendicular to the working direction 7 and slidingly engaged by a corresponding cursor 47 connected to the control unit 8.

Each cursor 47 is connected to a thrust element 48, which serves to engage, in use, a free longitudinal edge of the sheet 2 which has previously been fed in the gripping position in order to push the sheet 2 transversally until the opposite free longitudinal edge is coupled with the claws 25 (figure 13).

The operation of the machine 1 will hereinafter be described on the basis of the operational configuration shown in figure 5, in which the shutter 34 has been moved in the open position so as to leave the opening 32 free and allow the gripping heads 43 to be introduced within the store 26 and engage an axial end of the sheet 2 arranged on top of the stack of sheets 2 which has previously been loaded in the store 26.

Once they are activated, the gripping heads 43 adhere to the sheet 2 so that, when the gripping heads 43 are taken back to the lifted position, the axial end of the sheet 2 is also lifted and taken to an upper level corresponding to the work surface 4, accordingly bringing the sheet 2 to an inclined position (figure 6).

At this point the shutter 34 is activated and displaced (to the right of figure 6) so as to take it back to its closed position. At a certain point of this forward motion, the front end of the shutter 34 intercepts the sheet 2 and, by proceeding in the working direction 7, determines the progressive lifting thereof and the progressive extraction from the store 26 (figure 7). When the shutter 34 completely closes the opening 32, the gripping heads 43 are deactivated and the sheet 2 is arranged in a horizontal position and totally rested on the brushes 40 of the shutter 34 (figure 8).

At this point, the shutter 34 is moved further forward in the working direction 7 by a segment sufficient to take the sheet 2 in the gripping position, in which the sheet 2 is arranged with a free longitudinal edge thereof in a position facing and spaced from the claws 25 and with the opposite free longitudinal edge in a position facing and spaced from the cursors 47 of the loading device 38 arranged in a resting position. The following and simultaneous forward motion, in the direction 13, of the cursors 47 (figure 11) induces the corresponding thrust elements 48 to intercept the sheet 2 and to transversally push the sheet 2 towards the handling device 6 (figure 12) so that the free longitudinal edge of the sheet 2 facing the feeding device 6 is introduced between the jaws of the claws 25.

Once the cursors 47 have been taken back to their resting position, the feeding device 6 drags the sheet 2 through the cutting station 5 according to a sequence of forward movements given by the control unit 8 to allow the cutting head 9 to carry out the desired cutting sections.

According to figure 9, at the end of the cutting operation, the scrap 16 of the processed sheet 2 is arranged on the portion 15 and, once the claws 25 have been opened, it is released on the brushes 40 of the shutter 35. At this point the shutter 35 is activated in order to move forward in the feeding direction 7, so as to move away the scrap 16 from the cutting station 5 and take a free front transversal edge of the sheet 2 in abutment against the catch 39. The continuous forward movement of the shutter 35 determines the progressive opening of the opening 33 and the subsequent reduction of the resting surface of the scrap 16 until the scrap 16 is free to fall by gravity on the support 28 and on the other scraps 16 which have previously been stacked up in the store 27.

The shutter 35 is therefore taken back to the closed position of the opening 33.

With reference to the above, it should be specified that the control unit 8 is capable of handling the shutters 34 and 35 in a reciprocally independent manner so that the extraction operation of a sheet 2 from the store 26 may be carried out not only afterwards, but also simultaneously to the unloading operation of a scrap 16 in the store 27, thereby allowing a considerable reduction of the dead times between the processing of a sheet 2 and the other.

## Claims

1. A laser cutting machine for metal sheets (2) comprising, in combination, a laser cutting station (5); a loading store (26) for the metal sheets (2) and an unloading store (27) for metal sheet scraps (16), the two stores (26, 27) being arranged on opposite sides of the laser cutting station (5) in a working direction (7), in which the metal sheets (2) are moved through the laser cutting station (5); and a work surface (4) extending above the loading and unloading stores (26, 27) and through the laser cutting station (5), the work surface (4) comprising an intermediate portion (17) arranged at the laser cutting station (5) and provided with a door (18) that may be opened to unload cut parts of metal sheet (2), a first portion (14), which is movable from and towards a closed position of the loading store (26), and a second portion (15), which is movable from and towards a closed position of the unloading store (27); a handling device (6) to feed the metal sheets (2) along the work surface (4) in the working direction (7) when the first and the second portion (14, 15) are arranged in the closed position; and extraction means (42) to selectively lift the metal sheets (2) from the loading store (26) at least in part above the work surface (4) when the first portion (14) is arranged in an open position.

2. A machine according to claim 1, wherein the first portion (14) is movable from the open position to the closed position in the working direction (7).

3. A machine according to claim 1 or 2, wherein each of said first and second portions (14, 15) is a metal sheet articulated conveyor (34, 35), which is movable along a closed path extending around the corresponding store (26, 27).

4. A machine according to any one of the foregoing claims, wherein the extraction means (42) comprise a gripping device (43), which is mounted for movement through the work surface (4) to grip a sheet (2) arranged in the loading store (26) and lift the sheet (2) at least partially above the work surface (4).

5. A machine according to claims 3 and 4, wherein the gripping device (43) is arranged at an inlet end of the work surface (4) to grip a rear end portion, in the working direction (7), of a metal sheet (2) arranged in the loading store (26) and lift the rear end portion of the metal sheet (2) above the work surface (4).

6. A machine according to any one of the foregoing claims, comprising loading means (38) to displace the metal sheets (2) on the first portion (14) until the metal sheets (2) are coupled with the handling device (6).

7. A machine according to claim 6, wherein the handling device (6) comprises a plurality of clamping means (25) which are arranged along a longitudinal edge of the work surface (4) and are movable in the working direction (7); the loading means (38) being movable transversally to the working direction (7) to displace the metal sheets (2) in engagement with said clamping means (25).
